# FASCICULE DE BREVET EUROPEEN

(11) **EP 0 902 727 B1**
(45) Date de publication et mention de la délivrance du brevet: **06.11.2002**
(21) Numéro de dépôt: 97924085.0
(22) Date de dépôt: 13.05.1997
(51) Int. Cl.: B01J 27/30, B01J 37/20, B01J 38/64, B01J 23/94

(54) **PROCEDE DE REGENERATION D'UN CATALYSEUR PRESENTANT UNE PHASE ACTIVE SOUFREE ET CONTAMINE PAR UN COMPOSE DU MERCURE**
REGENERIERUNGSVERFAHREN EINES KATALYSATORS MIT EINER SCHWEFELHALTIGEN PHASE UND KONTAMINIERT MIT QUECKSILBER
METHOD FOR REGENERATING A CATALYST WITH A SULPHURUS ACTIVE PHASE AND CONTAMINATED BY A MERCURY COMPOUND

(30) Priorité: 20.05.1996 FR 9606202
(43) Date de publication de la demande: 24.03.1999
(73) Titulaire: Procatalyse, 92500 Rueil Malmaison (FR)
(72) Inventeur: OLLIVIER, James, F-30340 Saint Julien les Rosiers (FR); LE CLOIREC, Pierre, F-44240 La Chapelle sur Erdre (FR); BOURNONVILLE, Jean-Paul, F-30340 Rousson (FR); NOCHER, Bernard, F-78170 La Celle Saint Cloud (FR)
(74) Mandataire: Jacobson, Claude
(86) Numéro de dépôt international: FR9700847
(87) Numéro de publication internationale: WO97044131

(56) Documents cités:
- EP-A- 0 153 233
- EP-A- 0 198 730
- GB-A- 1 109 939
- US-A- 3 870 624
- US-A- 4 740 491

## Description

La présente invention concerne un procédé de traitement de catalyseurs usagés contaminés par du mercure afin de les régénérer et les réutiliser.

De nos jours, le traitement des produits usés, contaminés, est une activité prenant de plus en plus d'importance. Les contraintes en matière d'environnement conduisent à épurer tous types de liquides, solides ou gaz visant à abaisser leur taux de matières polluantes et éviter le rejet de ces dernières dans l'environnement.

De nombreux catalyseurs ont été développés dans le but d'éliminer ces impuretés par absorption, adsorption ou réactions chimiques. Cependant, une fois que les produits contaminés ont été épurés, les impuretés se retrouvent à fortes concentrations dans ces catalyseurs que l'on doit stocker ou détruire.

Actuellement, on tend à essayer de traiter ces catalyseurs usagés de manière à en éliminer les impuretés. Ce traitement vise, d'une part, à récupérer des impuretés pour les valoriser ou les transformer sous une forme facilement stockable, et d'autre part, à régénérer les catalyseurs usagés afin de pouvoir les réutiliser. Ce deuxième aspect permet en outre de réaliser des économies puisqu'il n'est pas nécessaire de racheter un nouvelle charge de catalyseur neuf.

Parmi les impuretés particulièrement néfastes pour l'environnement, le mercure, sous toutes ses formes, tient une place importante. Il est notamment présent dans le gaz naturel ou les coupes pétrolières. Un moyen d'éliminer le mercure de ces gaz est de les mettre en contact avec un catalyseur à base d'un composé du soufre par exemple un catalyseur supporté présentant un support minéral et une phase active à base d'un composé du soufre, par exemple du sulfure de cuivre.

Le mercure présent dans les gaz réagit au contact de ces catalyseurs pour former un composé du mercure, notamment du sulfure de mercure, qui reste adsorbé ou absorbé sur le catalyseur.

Actuellement, les catalyseurs usagés comprenant ces composés du mercure sont détruits ou stockés ; et une nouvelle charge de catalyseur neuf doit être utilisée pour continuer de traiter les gaz.

Un but de la présente invention est de proposer un procédé de traitement des catalyseurs usagés de ce type permettant non seulement d'en éliminer le mercure mais de plus de régénérer la phase active initiale dudit catalyseur de manière à pouvoir l'utiliser de nouveau dans la même application sans avoir à redéposer une nouvelle phase active.

Dans ce but, l'invention concerne un procédé de régénération d'un catalyseur supporté présentant un phase active à base d'un composé du soufre et un support minéral, contaminé par un composé du mercure, dans lequel on met en oeuvre les étapes suivantes :
- on met en contact ledit catalyseur avec une solution aqueuse basique d'au moins un sulfure choisi parmi les sulfures de métaux alcalins, les sulfures de métaux alcalino-terreux ou le sulfure d'ammonium,
- puis on sépare le catalyseur de la solution aqueuse basique.

D'autres avantages de l'invention apparaîtront plus clairement à la lecture de la description et des exemples.

L'invention concerne donc un procédé de régénération d'un catalyseur supporté présentant un phase active à base d'un composé du soufre et un support minéral, contaminé par un composé du mercure, dans lequel on met en oeuvre les étapes suivantes :
- on met en contact ledit catalyseur avec une solution aqueuse basique d'au moins un sulfure choisi parmi les sulfures de métaux alcalins, les sulfures de métaux alcalino-terreux ou le sulfure d'ammonium,
- puis on sépare le catalyseur de la solution aqueuse basique.

Selon le procédé de l'invention, le catalyseur usagé, duquel il faut éliminer les composés du mercure, est mis en contact avec une solution aqueuse basique d'un ou plusieurs sulfures tels que définis ci-dessus.

De préférence, la solution aqueuse basique est une solution de sulfure de sodium ou de sulfure de potassium.

Selon un mode préféré du procédé de l'invention, cette solution aqueuse basique est obtenue par mélange d'une solution aqueuse d'un de ces sulfures et de soude.

Dans ce cas, la concentration de la soude est de préférence d'au moins 0,1 M dans le mélange, notamment d'au moins 0,5 M.

D'une manière générale, il est conseillé d'utiliser une solution aqueuse basique dont le pH est d'au moins 10, de préférence d'au moins 12.

De manière à optimiser les quantités de produits à mettre en oeuvre, on met en contact, de préférence, le catalyseur avec la solution aqueuse basique en telles quantités que le rapport molaire du soufre apporté par la solution aqueuse basique sur le mercure présent dans le catalyseur (S/Hg) est d'au moins 5, de préférence d'au moins 10.

De même, il est conseillé de mettre en contact le catalyseur avec la solution aqueuse basique en telles quantités que le rapport du volume de la solution aqueuse basique sur la masse du catalyseur (US) est d'au moins 2 l/kg, de préférence d'au moins 5.

Le temps de contact du catalyseur usé et de la solution aqueuse basique peut être variable. Il est en général compris entre 30 minutes et 8 heures. Un temps de contact d'environ 2 heures est habituellement suffisant.

Selon un mode préféré, le traitement est effectué dans les conditions suivantes :
. le sulfure utilisé est le sulfure de sodium,
. la solution aqueuse basique de sulfure de sodium présente une concentration en Na₂S de 0,5 M,
. la solution aqueuse basique de sulfure de sodium présente une concentration en NaOH de 0,5 M,
. et le rapport US est de 5 l/kg.

La séparation entre le solide et la solution de traitement peut être réalisée par différentes techniques telles que filtration, égouttage, décantation, floculation et toute autre technique connue de l'homme de l'art.

Habituellement, après avoir séparé le catalyseur et la solution aqueuse basique, on peut laver le catalyseur à l'aide d'une solution aqueuse de lavage.

Cette solution aqueuse de lavage peut être une nouvelle solution aqueuse basique de sulfure(s) telle que définie précédemment ou simplement de l'eau.

En général, après avoir séparé le catalyseur et la solution aqueuse basique, et éventuellement lavé le catalyseur, on peut sécher le catalyseur.

Ce séchage peut être réalisé par étuvage, traitement sous balayage d'un gaz inerte en température à une température comprise entre 50 et 100 °C.

Il peut être intéressant, après avoir séparé le catalyseur de la solution aqueuse basique de traitement, de valoriser ladite solution aqueuse basique par traitement en présence d'un composé acide. En introduisant un composé acide dans la solution aqueuse basique issue du procédé selon l'invention, le composé du mercure s'y trouvant sous forme soluble est précipité si bien qu'il peut être facilement récupéré par une simple filtration.

La solution séparée du composé du mercure précipité est ensuite traitée pour récupérer H₂S en vue de son recyclage éventuel. Ainsi les sulfures contenus dans cette solution sont décomposés, par exemple par ajout d'un composé acide, pour donner de l'H₂S qui est éliminé par volatilisation (chauffage, barbotage de gaz tels que air, N₂, ...) puis récupéré par absorption dans une solutions basique à base de soude par exemple. Cette solution basique issue de l'absorption de l'H₂S peut être réutilisée pour un nouveau cycle de traitement d'une charge de catalyseur usé.

Les composés acides permettant de précipiter le mercure et de décomposer les sulfures peuvent être choisis parmi l'acide chlorhydrique ou l'acide sulfurique. Il est préférable d'ajouter à la solution aqueuse basique un composé acide de manière à ce que le pH du mélange, soit d'au plus 7, de préférence d'au plus 2.

Le procédé selon l'invention est particulièrement utile pour traiter un catalyseur supporté présentant une phase active à base de sulfure de cuivre. La quantité de ce composé dans le catalyseur à traiter peut être variable, elle peut atteindre 6 % en poids par rapport à la masse du catalyseur.

Le catalyseur supporté peut présenter un support minéral à base d'alumine, de silice, de silice-alumine ou de charbon.

L'élimination du mercure est suivie par analyse au moyen de différentes techniques analytiques connues pour le dosage du mercure, notamment par spectrométrie d'émission à plasma.

L'avantage du procédé selon l'invention est que non seulement le mercure est éliminé du catalyseur, mais de plus que la phase active du catalyseur est régénérée et que le support présente les mêmes caractéristiques que lors de sa première utilisation.

Le sulfure de mercure peut être valorisé.

Les exemples suivants illustrent l'invention sans toutefois en limiter la portée.

### EXEMPLE

On part d'un catalyseur présentant les caractéristiques suivantes :
- Support :
   . alumine
   . SS = 125 m²/g
   . VPT = 0.75 cm³/g
- Phase active
   . CuS
   . taux : 15,3 % en poids par rapport au catalyseur

Ce catalyseur est utilisé dans une unité pour éliminer du mercure d'un gaz naturel. A la fin du traitement du gaz, le catalyseur comprend 5,2 % en poids de sulfure mercurique.

Le catalyseur est vidé de l'unité pour être traité selon le procédé de l'invention.

On introduit 1 kg de catalyseur usé dans un réacteur. On prépare 5 litres d'une solution aqueuse de sulfure de sodium et de soude présentant les caractéristiques suivantes :
- pH = 13 - 14
- concentration en NaOH = 0,5 M
- concentration en Na₂S = 0,5 M
- rapport molaire S/Hg = 11,2

On maintient pendant 2 heures une circulation de la solution de traitement sur le catalyseur.

Puis le réacteur est vidé de la solution de sulfure de sodium. Le catalyseur est lavé par une autre solution de sulfure de sodium présentant les mêmes caractéristiques que la précédente, puis par de l'eau.

Il est enfin séché.

La teneur résiduelle en sulfure mercurique est inférieure à 0,1 % en poids par rapport au catalyseur. La solution de traitement, contenant le sulfure mercurique, est ensuite additionnée d'acide chlorhydrique de façon à atteindre un pH inférieur ou égal à 2. Dans ces conditions, le sulfure mercurique précipite. Sa concentration résiduelle dans la solution après addition d'acide chlorhydrique est inférieure ou égale à 0,02 mg/l.

## Revendications

1. Procédé de régénération d'un catalyseur supporté présentant une phase active à base d'un composé du soufre et un support minéral, contaminé par un composé du mercure, **caractérisé en ce qu'**on met en oeuvre les étapes suivantes :
- on met en contact ledit catalyseur avec une solution aqueuse basique d'au moins un sulfure choisi parmi les sulfures de métaux alcalins, les sulfures de métaux alcalino-terreux ou le sulfure d'ammonium,
- puis on sépare le catalyseur de la solution aqueuse basique.

2. Procédé selon la revendication 1, **caractérisé en ce que** la solution aqueuse basique est une solution de sulfure de sodium ou de sulfure de potassium.

3. Procédé selon la revendication 1 ou 2, **caractérisé en ce que** la solution aqueuse basique est obtenue par mélange d'une solution aqueuse d'au moins un sulfure, choisi parmi les sulfures de métaux alcalins, les sulfures de métaux alcalino-terreux ou le sulfure d'ammonium, et de soude.

4. Procédé selon la revendication 2 ou 3, **caractérisé en ce que** la concentration de la soude est d'au moins 0,1 M.

5. Procédé selon l'une quelconque des revendications 1 à 4, **caractérisé en ce que** le pH de la solution aqueuse basique est d'au moins 10, de préférence d'au moins 12.

6. Procédé selon l'une quelconque des revendications 1 à 4, **caractérisé en ce qu'**on met en contact le catalyseur avec la solution aqueuse basique en telles quantités que le rapport molaire du soufre apporté par la solution aqueuse basique sur le mercure présent dans le catalyseur (S/Hg) est d'au moins 5.

7. Procédé selon l'une quelconque des revendications 1 à 6, **caractérisé en ce qu'**on met en contact le catalyseur avec la solution aqueuse basique en telles quantités que le rapport du volume de la solution aqueuse basique sur la masse du catalyseur (US) est d'au moins 2, de préférence d'au moins 5.

8. Procédé selon l'une quelconque des revendications 1 à 7, **caractérisé en ce qu'**après avoir séparé le catalyseur et la solution aqueuse basique, on lave le catalyseur à raide d'une solution aqueuse de lavage.

9. Procédé selon l'une quelconque des revendications 1 à 8, **caractérisé en ce qu'**après avoir séparé le catalyseur et la solution aqueuse basique, et éventuellement lavé le catalyseur, on sèche le catalyseur.

10. Procédé selon l'une quelconque des revendications 1 à 9, **caractérisé en ce qu'**après avoir séparé le catalyseur et la solution aqueuse basique, on valorise ladite solution aqueuse basique par ajout d'un composé acide.

11. Procédé selon la revendication 10, **caractérisé en ce qu'**on ajoute à la solution aqueuse basique un composé acide de manière à ce que le pH du mélange soit d'au plus 7.

12. Procédé selon l'une quelconque des revendications 1 à 11, **caractérisé en ce que** le catalyseur supporté présente une phase active à base de sulfure de cuivre.

13. Procédé selon l'une quelconque des revendications 1 à 12, **caractérisé en ce que** le catalyseur supporté présente un support minéral à base d'alumine, de silice, de silice-alumine ou de charbon.

14. Procédé selon l'une quelconque des revendications 1 à 13, **caractérisé en ce que** le composé du mercure est le sulfure de mercure.

## Patentansprüche

1. Regenerierungsverfahren eines geträgerten Kätalysators mit einer auf einer schwefelhaltigen Verbindung basierenden aktiven Phase und einem mineralischen Träger, kontaminiert durch eine Quecksilber-Verbindung,
**dadurch gekennzeichnet, dass** man die folgenden Schritte durchführt:
- man bringt besagten Katalysator in Kontakt mit einer wässrigen basischen Lösung von mindestens einem Sulfid, ausgewählt aus Alkalimetall-Sulfiden, Erdalkalimetall-Sulfiden oder Ammoniumsulfid,
- dann trennt man den Katalysator von der wässrigen basischen Lösung.

2. Verfahren gemäß dem Anspruch 1, **dadurch gekennzeichnet, dass** die wässrige basische Lösung, eine Lösung von Natriumsulfid oder von Kaliumsulfid ist.

3. Verfahren gemäß dem Anspruch 1 oder 2, **dadurch gekennzeichnet, dass** die wässrige basische Lösung erhalten wird, durch Mischen einer wässrigen Lösung, von mindestens einem Sulfid, ausgewählt aus Alkalimetall-Sulfiden, Erdalkalimetall-Sulfiden oder Ammoniumsulfid, und Soda.

4. Verfahren gemäß einem der Ansprüche 2 oder 3, **dadurch gekennzeichnet, dass** die Konzentration des Sodas mindestens 0,1 M ist.

5. Verfahren gemäß einem der Ansprüche 1 bis 4, **dadurch gekennzeichnet, dass** der pH-Wert der wässrigen basischen Lösung mindestens 10, vorzugsweise mindestens 12 ist.

6. Verfahren gemäß einem der Ansprüche 1 bis 4, **dadurch gekennzeichnet, dass** man den Katalysator mit der wässrigen basischen Lösung in solchen Mengen in Kontakt bringt, dass das Molverhältnis des Schwefels, eingebracht durch die wässrige basische Lösung, zum im Katalysator vorhandenen Quecksilber (S/Hg) mindestens 5 beträgt.

7. Verfahren, gemäß einem der Ansprüche 1 bis 6 **dadurch gekennzeichnet, dass** man den Katalysator, mit der wassrigen basischen Lösung in solchen Mengen in Kontakt bringt, dass das Verhältnis des Volumens der wässrigen basischen Lösung zur Masse des Katalysators (L/S) mindestens 2 beträgt, vorzugsweise mindestens 5.

8. Verfahren gemäß, einem der Ansprüche 1 bis 7, **dadurch gekennzeichnet, dass** man, nachdem man den Katalysator und die wässrige basische Lösung getrennt hat, den Katalysator mit Hilfe einer wässrigen Waschlösung wäscht.

9. Verfahren gemäß einem der Ansprüche 1 bis 8, **dadurch gekennzeichnet, dass** man, nachdem man den Katalysator und die wässrige basische Lösung getrennt hat, und eventuell den Katalysator gewaschen hat, den Katalysator trocknet.

10. Verfahren gemäß einem der Ansprüche 1 bis 9, **dadurch gekennzeichnet, dass** man, nachdem man den Katalysator und die wässrige basische Lösung getrennt hat, besagte wässrige basische Lösung durch Zugabe einer sauren Verbindung weiter verwertbar macht.

11. Verfahren gemäß dem Anspruch 10, **dadurch gekennzeichnet, dass** man zur wässrigen basischen Lösung eine saure Verbindung zugibt, so dass der pH-Wert der Mischung höchstens 7 sei.

12. Verfahren gemäß einem der Ansprüche 1 bis 11, **dadurch gekennzeichnet, dass** der geträgerte Katalysator eine aktive Phase auf Basis von Kupfersulfid aufweist.

13. Verfahren gemäß einem der Ansprüche 1 bis 12, **dadurch gekennzeichnet, dass** der geträgerte Katalysator einen mineralischen Träger auf Aluminiumoxid-, Siliziumoxid-, Siliziumoxid-Aluminiumoxid- oder auf Kohle-Basis aufweist.

14. Verfahren gemäß einem der Ansprüche 1 bis 13, **dadurch gekennzeichnet dass** die Quecksilberverbindung Quecksilbersulfid ist.

## Claims

1. Process for regenerating a supported catalyst having an active phase based on a sulphur compound and a mineral support, contaminated with a mercury compound, **characterised in that** the following steps are carried out:
- the catalyst is brought into contact with a basic aqueous solution of at least one sulphide selected from among the alkali metal sulphides, the alkaline earth metal sulphides and ammonium sulphide,
- then the catalyst is separated from the basic aqueous solution.

2. Process according to claim 1, **characterised in that** the basic aqueous solution is a sodium sulphide or potassium sulphide solution.

3. Process according to claim 1 or 2, **characterised in that** the basic aqueous solution is obtained by mixing an aqueous solution of at least one sulphide, selected from among the alkali metal sulphides, the alkaline earth metal sulphides or ammonium sulphide, and sodium hydroxide solution.

4. Process according to claim 2 or 3, **characterised in that** the concentration of the sodium hydroxide solution is at least 0.1 M.

5. Process according to any one of claims 1 to 4, **characterised in that** the pH of the basic aqueous solution is at least 10, preferably at least 12.

6. Process according to any one of claims 1 to 4, **characterised in that** the catalyst is brought into contact with the basic aqueous solution in quantities such that the molar ratio of sulphur introduced by the basic aqueous solution to the mercury present in the catalyst (S/Hg) is at least 5.

7. Process according to any one of claims 1 to 6, **characterised in that** the catalyst is brought into contact with the basic aqueous solution in quantities such that the ratio of the volume of the basic aqueous solution to the mass of the catalyst (L/S) is at least 2, preferably at least 5.

8. Process according to any one of claims 1 to 7, **characterised in that** after the catalyst and the basic aqueous solution have been separated, the catalyst is washed with an aqueous washing solution.

9. Process according to any one of claims 1 to 8, **characterised in that** after the catalyst and the basic aqueous solution have been separated, and the catalyst has optionally been washed, the catalyst is dried.

10. Process according to any one of claims 1 to 9, **characterised in that** after the catalyst and the basic aqueous solution have been separated, an acid compound is added to the basic aqueous solution.

11. Process according to claim 10, **characterised in that** an acid compound is added to the basic aqueous solution so that the pH of the mixture is at most 7.

12. Process according to any one of claims 1 to 11, **characterised in that** the supported catalyst has an active phase based on copper sulphate.

13. Process according to any one of claims 1 to 12, **characterised in that** the supported catalyst has a mineral support based on alumina, silica, silica/alumina or charcoal.

14. Process according to any one of claims 1 to 13, **characterised in that** the mercury compound is mercury sulphide.
